# EUROPEAN PATENT APPLICATION

(11) **EP 3 085 237 A1**
(43) Date of publication of application: **26.10.2016**
(21) Application number: 14872033.7
(22) Date of filing: 05.12.2014
(51) Int. Cl.: A21D 13/08, A23D 7/00, A23D 9/00

(54) **BAKED CONFECTION**

(30) Priority: 17.12.2013 JP 2013259701
(71) Applicant: The Nisshin Oillio Group, Ltd., Chuo-ku Tokyo 104-8285 (JP)
(72) Inventor: SAKURADA, Miho, Yokosuka-shi Kanagawa 239-0832 (JP); OZAWA, Takuya, Yokosuka-shi Kanagawa 239-0832 (JP)
(74) Representative: Dennemeyer & Associates S.A.
(86) International application number: PCT/JP2014/082203
(87) International publication number: WO 2015/093310

(57) **Abstract**

An object of the present invention is to provide a baked confectionery with good aroma, which can maintain its shape and has the crispy texture and is not fragile in spite of having a high oil content. The present invention provide a baked confectionery obtained by using cereal flour, oils and fats, and saccharides as main raw materials, the baked confectionery including the oils and fats by 60 to 120 mass% relative to the cereal flour. The oils and fats contain triacylglycerol including a medium-chain fatty acid with 6 to 10 carbons as a constituent fatty acid by 50 mass% or more relative to the oils and fats.

## Description

### TECHNICAL FIELD

### CROSS-REFERENCE

This application claims priority from Japanese Patent Application No. 2013-259701 filed with the Japan Patent Office on December 17, 2013, the entire content of which is hereby incorporated by reference.

The present invention relates to baked confectioneries. More specifically, the present invention relates to baked confectioneries with good aroma, which can maintain its shape, have the crispy texture, and are not fragile in spite of having a high oil content.

### BACKGROUND ART

Baked confectioneries such as cookies, biscuits, and crackers are obtained by baking molded dough in an oven or the like. The dough is made by adding, as necessary, salts, starch, dairy products, egg products, yeast, enzyme, a leavening agent, or a food additive to main raw materials such as cereal flour, oils and fats, or saccharides. Such baked confectioneries with unique color and texture can be easily made at homes. This is why the baked confectioneries are popular in the world. Baked confectioneries contain such low moisture that they can be preserved well, and are also available as staple food. For these reasons, the baked confectioneries are loved by people all over the world.

In regard to the texture of the baked confectioneries, there are various baked confectioneries with various textures, including crackers with crispy texture, hard biscuits with hard texture, and soft cookie with moist texture, according to personal preference. In recent years, people have come to desire for other texture, specifically the baked confectioneries with crispier texture.

Techniques for providing the baked confectionery with the crispy texture include the technique (Patent Literature 1) in which stearic acid calcium, diglycerol mono-fatty acid ester, and edible oils and fats are used in combination and the technique (Patent Literature 2) in which oils and fats containing a particular amount of POP and lauric acid are used. These techniques, however, require time and effort because of using the particular materials, and therefore are not necessarily the satisfying methods of providing the baked confectioneries with the crispy texture.

In one of known techniques for improving the texture of the baked confectioneries, the amount of oils and fats is increased. In this technique, however, increasing the content amount of oils and fats causes a problem that the oils and fats dissolved out of the dough in the step of baking prevent the dough from maintaining its shape. In view of this, for dealing with this problem, the typical technique employs a superheated vapor process in the step of baking the cookie (Patent Literature 3). However, the superheated vapor process requires a special device and therefore this technique requires time and effort. As a result, a simpler method of manufacturing the baked confectionery which can maintain its shape and has the crispy texture in spite of having a high oil content has been desired.

### CITATION LIST

### PATENT LITERATURE

PATENT LITERATURE 1: JP-A-2006-129755
PATENT LITERATURE 2: JP-A-2010-4806
PATENT LITERATURE 3: JP-A-2012-200241

### SUMMARY

### PROBLEMS TO BE SOLVED BY THE INVENTION

An object of the present invention is to provide a baked confectionery with good aroma, which can maintain its shape and has the crispy texture and is not fragile in spite of having a high oil content.

### SOLUTION TO THE PROBLEMS

The present inventors have conducted concerted studies on the method of manufacturing baked confectioneries with a high oil content. As a result, the present inventors have found out that by using oils and fats including triacylglycerol whose long-chain fatty acid is partly replaced by the medium-chain fatty acid, the baked confectionery with good aroma, which can maintain its shape, has the crispy texture, and is not fragile in spite of having a high oil content by over 60 mass% relative to flour can be obtained. Thus, the present invention has been completed.

Thus, according to one aspect of the present invention, a baked confectionery obtained by using cereal flour, oils and fats, and saccharides as main raw materials can be provided, the baked confectionery including the oils and fats by 60 to 120 mass% relative to the cereal flour. The oils and fats contain triacylglycerol including a medium-chain fatty acid with 6 to 10 carbons as a constituent fatty acid by 50 mass% or more relative to the oils and fats.

According to the preferable aspect of the present invention, the baked confectionery configured such that the cereal flour is one kind or two or more kinds selected from strong flour, medium-strength flour, weak flour, whole wheat flour, brown rice flour, rye, corn, whole fat soybean flour, defatted soybean flour, and rice flour can be provided.

According to the preferable aspect of the present invention, the baked confectionery configured such that the oils and fats are one kind or two or more kinds selected from edible oils, margarine, fat spread, and shortening can be provided.

According to the preferable aspect of the present invention, a food including the above described baked confectionery can be provided.

Further, according to the other aspect of the present invention, a quality modifier for a baked confectionery containing oils and fats by 60 to 120 mass% relative to cereal flour can be provided, the quality modifier containing triacylglycerol including a medium-chain fatty acid with 6 to 10 carbons as an active ingredient.

### EFFECTS OF THE INVENTION

According to the present invention, oils and fats containing 50 mass% or more of triacylglycerol including the medium-chain fatty acid with 6 to 10 carbons as the constituent fatty acid are added to cereal flour in the manufacture of baked confectioneries. Thus, the baked confectionery with good aroma, which can maintain its shape and has the crispy texture and is not fragile in spite of having a high oil content, can be provided easily. In this manner, it is possible to meet the demand for people who have been unsatisfied with the existing baked confectioneries. In addition, the medium-chain fatty acid contributing to the higher endurance and nutrition supply can be easier to eat and tastes better. This enables people to take in a large amount of medium-chain fatty acid. The baked confectionery according to the present invention has a high oil content but is not fragile. For this reason, the baked confectionery according to the present invention can be delivered to people without a damage and looks good. For the good aroma, the product value of the baked confectionery according to the present invention is very high.

### DESCRIPTION OF THE EMBODIMENTS

The baked confectionery according to the present invention is described in order. The baked confectionery according to the present invention is obtained by baking cereal flour, oils and fats, and saccharides as the main raw materials. These materials may be the commercially available products. The baked confectionery may be any baked confectionery containing cereal flour, oils and fats, and saccharides as the main raw materials. For example, cookies (such as rotary molded cookies, wire cut cookies, and piped cookies), biscuits, crackers, sable cookies, pies, wafers, and snacks are given. Above all, cookies, sable cookies, and pies containing a large amount of oils and fats are preferable. The baked confectionery according to the present invention does not include so-called cake such as sponge cake, Japanese sponge cake (Castella), and pancakes.

Examples of the cereal flour in the present invention include strong flour, medium-strength flour, weak flour, whole wheat flour, brown rice flour, rye flour, corn flour, and rice flour. Any one kind or two or more kinds thereof can be used. For providing the natural crispy texture unique to the baked confectionery, it is preferable to use the cereal flour containing dietary fiber by less than 4 mass%, such as strong flour, medium-strength flour, and weak flour. In the raw materials of the baked confectionery, the cereal flour is contained by preferably 1 to 70 mass%, more preferably 20 to 60 mass%, and much more preferably 30 to 50 mass%.

Examples of oils and fats according to the present invention include edible oils, margarine, fat spread, and shortening. Any one kind or two or more kinds thereof can be used. In the raw materials of the baked confectionery, the oils and fats are contained with respect to the cereal flour by preferably 60 to 120 mass%, more preferably 60 to 100 mass%, and much more preferably 70 to 90 mass%. In order to enable the baked confectionery to maintain its shape and have the crispy texture in spite of having a high oil content, 50 mass% or more of the oils and fats in the raw materials of the baked confectionery need to be triacylglycerol including the medium-chain fatty acid with 6 to 10 carbons as the constituent fatty acid. The oils and fats in the raw materials of the baked confectionery include the triacylglycerol by preferably 70 mass% or more, more preferably 80 mass% or more, and much more preferably 90 mass% or more. It is the most preferable that oils and fats in the raw materials of the baked confectionery according to the present invention are entirely (100 mass%) the triacylglycerol

The oils and fats in the baked confectionery according to the present invention do not include oils and fats derived from oil-containing raw materials other than the oils and fats to be mixed. For example, cocoa mass contain oils and fats (cocoa butter) by approximately 55 mass%, cocoa powder contain oils and fats (cocoa butter) by approximately 11 mass%, and whole milk powder contain oils and fats (milk fat) by approximately 25 mass%. If chocolate is mixed in the dough for baked confectionery, the oils and fats corresponding to approximately 30 mass% of the entire chocolate are included in the dough. In the present invention, however, the oils and fats derived from such an oil-containing raw material are not included in the oils and fats included in the baked confectionery.

As described above, the oils and fats in the baked confectionery according to the present invention contain triacylglycerol including the medium-chain fatty acid with 6 to 10 carbons as the constituent fatty acid. This triacylglycerol may be triacylglycerol including only the medium-chain fatty acid with 6 to 10 carbons as the constituent fatty acid, or may be mixed acid group triacylglycerol including the medium-chain fatty acid with 6 to 10 carbons as the constituent fatty acid. The binding position of each medium-chain fatty acid to glycerin is not particularly limited. In the case of the mixed acid group triacylglycerol, the fatty acid other than the fatty acid with 6 to 10 carbons may be included in a part of the constituent fatty acids. For example, this mixed acid group triacylglycerol may include the long-chain fatty acid. The oils and fats used in the present invention may be, for example, a mixture of oils and fats with a plurality of different molecular species, such as a mixture of trioctanoylglycerol and tridecanoylglycerol. Here, the medium-chain fatty acid with 6 to 10 carbons is preferably the straight-chained saturated fatty acid.

The triacylglycerol including the medium-chain fatty acid in the baked confectionery according to the present invention is preferably triacylglycerol including only the medium-chain fatty acid with 6 to 10 carbons as the constituent fatty acid (this triacylglycerol is also referred to as "MCT") and is more preferably MCT including only the medium-chain fatty acid with 8 or 10 carbons as the constituent fatty acid. MCT included in the oils and fats in the baked confectionery according to the present invention can be manufactured by a known method. For example, MCT can be manufactured in a manner that the fatty acid with 6 to 10 carbons and glycerol are subjected to dehydrating and condensing through heat treatment at 120°C to 180°C with the catalyst, preferably without the catalyst, in accordance with the normal method, and this reaction occurs preferably under reduced pressure.

The baked confectionery according to the present invention may include any edible oil as long as the baked confectionery contains oils and fats and triacylglycerol including the medium-chain fatty acid with 6 to 10 carbons in the amount within the above range. Examples of the edible oil include coconut oil, palm kernel oil, palm oil, fractionated palm oil (such as palm olein and palm super olein), shea fat, fractionated shea oil, sal fat, fractionated sal oil, illipe fat, soybean oil, rape-seed oil, cotton-seed oil, safflower oil, sunflower oil, rice oil, corn oil, sesame oil, olive oil, milk fat, and cocoa butter, a mixed oil thereof, and hydrogenated oil, a fractionated oil, and an interesterified oil thereof. One kind or two or more kinds of the edible oil can be used.

The baked confectionery according to the present invention includes margarine as the oils and fats. Margarine is a processed food product obtained by emulsifying and kneading the refined oils and fats including fermented milk, salt, and vitamins. In addition to oils and fats, water and seasoning and the like are included in margarine. For this reason, in regard to the oil and fat content of the margarine in the present invention, the extra materials such as water, fermented milk, and seasoning included in the margarine are added. The raw material oils and fats are solid at room temperature. Therefore, the raw material oils and fats are usually hydrogenated in the manufacturing process. In contrast to butter mainly containing milk, margarine mainly contains vegetable or animal oils and fats. According to JAS standard, margarine contains raw material oils and fats by 80% or more and fat spread contains raw material oils and fats by less than 80%. For margarine and fat spread, the hydrogenated vegetable oils and fats or interesterified oils and fats are often used as the oil phase component. Margarine and fat spread containing triacylglycerol including the medium-chain fatty acid with 6 to 10 carbons as the constituent fatty acid are suitably used. An example of such margarine or fat spread is the product of Nisshin Oillio Group, named "Risetta Soft".

The baked confectionery according to the present invention also includes shortening as the oils and fats. Shortening is originally the term representing the texture of "crispy" or "crunchy". Shortening to be mixed in the baked confectionery is the oils and fats in the semi-solid form (creamy) at room temperature so as to be kneaded in, and contains animal oils and fats or vegetable oils and fats such as soybean oil or corn oil. To begin with, shortening was developed as a substitute for lard. Shortening is white, and tasteless and odorless; in these points, shortening is different from the dairy products such as margarine or butter. Shortening does not contain water or milk components and is made of oils and fats by substantially 100%.

Examples below will show the baked confectioneries using shortening and margarine, and the confectionery using shortening contains less oils and fats relative to flour than the confectionery using margarine. However, using shortening tends to make it difficult for the baked confectionery to maintain its shape, have the crispy texture, be not fragile, and have the good aroma as compared to using margarine. In the present invention, one of shortening and margarine can be used. However, it is considered preferred to use both shortening and margarine in the implementation of the present invention in order to enable the baked confectionery to maintain its shape, for example.

As the saccharides in the present invention, any saccharides can be used. Saccharides are roughly classified into two: powder saccharide and liquid saccharide. Examples of the powder saccharides include powder monosaccharides such as glucose and fructose, powder disaccharides such as sucrose, maltose, and lactose, powder trehalose, and powder sugar alcohols. Any one kind or two or more kinds thereof can be used. Examples of the liquid saccharides include liquid sugar alcohols such as liquid sorbitol, liquid maltitol, and reduced sugar syrup, glucose liquid sugar, inverted sugar syrup such as glucose fructose liquid sugar and fructose glucose liquid sugar, sucrose liquid sugar, and liquid trehalose. Any one kind or two or more kinds thereof can be used. Any commercially available product of such saccharides can be used. The saccharides are contained in the raw materials for the baked confectionery by preferably 5 to 30 mass%, more preferably 10 to 30 mass%, and much more preferably 10 to 20 mass%.

Examples of other raw materials to be mixed in the present invention include cocoa powder, chocolate, chocolate chip, caramel, cheese, nuts, honey, processed products thereof, corn starch, potato starch, tapioca starch, other starches such as rice starches and various processed starches, polyglycerol fatty acid ester, sucrose fatty acid ester, sorbitan fatty acid ester, emulsifiers such as monoglyceride and organic acid monoglyceride, vitamins such as vitamin A, vitamin B, vitamin E, and vitamin C, whole milk powder, skim milk, milk powder, creaming powder, dextrin, orizanol, iron, calcium, lecithin, coenzyme Q, yeast extract, amino acid, eggshell powder, various kinds of fruits such as lemon preserved with sugar and liqueur, dried fruits, dried vegetables, fried fruits, fried vegetables, various flavor enhancers such as salt and seasoning, polysaccharide thickener, flavoring agents, water, milk, soybean milk, fruit juice, and vegetable juice.

In the present invention, foods including the baked confectionery according to the present invention are included. Examples thereof include baked confectioneries having cream, jam, marshmallow, bean jam, or the like wrapped therein or sandwiched between. By spreading and coating chocolate, sugar, egg white, soy sauce, oils and fats, or the like on the surface or the other side thereof, the baked confectionery with the good taste combination can be provided.

The method of manufacturing the baked confectionery according to the present invention is not particularly limited and may be a normal method. Examples thereof include baking in an oven or the like, microwave cooking with a microwave oven, and superheated steam cooking. The baked confectionery according to the present invention can be manufactured by mixing oils and fats containing triacylglycerol including the medium-chain fatty acid with 6 to 10 carbons in the known method. Specifically, first, the oils and fats containing triacylglycerol including the medium-chain fatty acid with 6 to 10 carbons, and other raw materials are added to the cereal flour and mixed by an appropriate means, thereby providing dough. The obtained dough is molded and baked; thus, the baked confectionery according to the present invention is manufactured.

Incidentally, triacylglycerol including the medium-chain fatty acid with 6 to 10 carbons used in the present invention modifies the baked confectionery into the baked confectionery having the crispy texture, in addition to enabling the baked confectionery to maintain the shape. Therefore, the present invention also relates to a quality modifier for the baked confectionery. This quality modifier is a quality modifier for the baked confectionery containing oils and fats by 60 to 120 mass% relative to cereal flour. This quality modifier includes triacylglycerol including the medium-chain fatty acid with 6 to 10 carbons as an active ingredient. Moreover, the quality modifier for the baked confectionery according to the present invention may be the quality modifier including a particular amount or more of triacylglycerol including the medium-chain fatty acid with 6 to 10 carbons described above as the active ingredient. Unless the effect of the present invention is lost, the quality modifier may contain oils and fats such as soybean oil or rape-seed oil, an excipient such as starches or dextrin, or other quality modifier.

### Examples

Next, the present invention will be described in more details with reference to Examples and Comparative Examples. The present invention, however, is not limited thereto. In the description below, "%" refers to mass% unless otherwise stated.

### <Analysis method>

The content amount of triacylglycerol was measured based on AOCS Ce5-86. The content amount of each fatty acid was measured based on AOCS Ce1f-96.

Triacylglycerol including the medium-chain fatty acid with 6 to 10 carbons is abbreviated as "MTG" below. Among such triacylglycerol, triacylglycerol including only the medium-chain fatty acid with 6 to 10 carbons as the constituent fatty acid is abbreviated as "MCT".

### <Oils and fats>

### [MCT 1]

MCT (manufactured by Nisshin OilliO Group, Ltd.) including n-octanoic acid (with 8 carbons) and n-decanoic acid (with 10 carbons) as the fatty acids included in triacylglycerol at a mass ratio of 30:70 was used as MCT 1.
[Vegetable oils and fats 1]: Coconut hydrogenated oil (manufactured by Nisshin OilliO Group, Ltd., the fatty acids in triacylglycerol include the medium-chain fatty acid by 12.3 mass% (specifically, 8.0 mass% of n-octanoic acid and 4.3 mass% of n-decanoic acid), containing MTG by 53.2 mass% and MCT by 0 mass%) was used as vegetable oils and fats 1.
[Vegetable oils and fats 2]: Fully hydrogenated high erucic rape-seed oil (manufactured by YOKOZEKI OIL & FAT INDUSTRIES CO., LTD. containing MTG by 0 mass%) was used as vegetable oils and fats 2.
[Vegetable oils and fats 3]: Rape-seed oil (manufactured by Nisshin OilliO Group, Ltd., containing MTG by 0 mass%) was used as vegetable oils and fats 3.
[Vegetable oils and fats 4]: Palm mid fraction (manufactured by Nisshin OilliO Group, Ltd., containing MTG by 0 mass%) was used as vegetable oils and fats 4.
[Interesterified oil 1] Interesterified oil obtained by chemically interesterifying mixed oil including 50 parts by mass of fully hydrogenated palm stearin oil and 50 parts by mass of fully hydrogenated palm kernel olein oil (fatty acids in triacylglycerol including 3.2 mass% of medium-chain fatty acid (specifically, 2.0 mass% of n-octanoic acid, 1.2 mass% of n-decanoic acid), and containing MTG by 13.2 mass% and MCT by 0 mass%) was used as interesterified oil 1.
[Interesterified oil 2] Interesterified oil obtained by chemically interesterifying palm olein (containing MTG by 0 mass%) was used as interesterified oil 2.

### <Preparation of margarine>

In accordance with Table 1, the oil phase and the water phase were prepared. Through plasticizing by rapid cooling with a combinator in accordance with the normal method, medium-chain margarine and long-chain margarine were prepared. Table 1 shows the content amount of MTG in the oils and fats.

**[Table 1]**

| Table 1: Components of margarine and content amount of MTG | | | (unit: mass%) |
|---|---|---|---|
| | | Medium-chain margarine | Long-chain margarine |
| Oil phase | MCT1 | 41.7 | - |
| | Vegetable oils and fats 1 | 32.9 | - |
| | Vegetable oils and fats 2 | 0.5 | 0.5 |
| | Vegetable oils and fats 3 | - | 41.7 |
| | Vegetable oils and fats 4 | - | 20.4 |
| | Interesterified oil 1 | 8.3 | 8.3 |
| | Interesterified oil 2 | - | 12.5 |
| | Emulsifier | 0.4 | 0.4 |
| Water phase | Water | 16.0 | 16.0 |
| | Salt | 0.2 | 0.2 |
| Total | | 100 | 100 |
| Content amount of MTG in oils and fats | | 60.3 | 1.1 |

### <Preparation of shortening>

With the components shown in Table 2, which exclude the water phase from the components shown in Table 1, the medium-chain shortening and long-chain shortening were prepared. Table 2 shows the content amount of MTG in the oils and fats.

**[Table 2]**

| Table 2: Components of shortening and content amount of MTG | | | (unit: mass%) |
|---|---|---|---|
| | | Medium-chain shortening | Long-chain shortening |
| Oil phase | MCT1 | 49.8 | - |
| | Vegetable oils and fats 1 | 39.3 | - |
| | Vegetable oils and fats 2 | 0.5 | 0.5 |
| | Vegetable oils and fats 3 | - | 49.8 |
| | Vegetable oils and fats 4 | - | 24.7 |
| | Interesterified oil 1 | 9.9 | 9.9 |
| | Interesterified oil 2 | - | 14.6 |
| | Emulsifier | 0.5 | 0.5 |
| Total | | 100 | 100 |
| Content amount of MTG in oils and fats | | 72.0 | 1.3 |

### [Example 1]

### <Manufacture of cookies>

Cookies according to Example 1 and Comparative Example 1 were manufactured with the components shown in Table 3. Specifically, first, white soft sugar, salt, and whole egg were mixed into the medium-chain margarine and the long-chain margarine with the components shown below. To this mixture, weak flour and baking powder were added and further mixed, thereby providing the cookie dough. The dough was spread with a reverse sheet to have a thickness of 4 mm, and then the dough was cut out with a round die with a size of 4 cm. The cut dough was baked in an oven at 180°C for 10 minutes, thereby providing the cookies as below.

**[Table 3]**

| [Table 3] Components of cookies and evaluation | | | | |
|---|---|---|---|---|
| | Example 1 | | Comparative Example 1 | |
| Raw materials | (g) | (%) | (g) | (%) |
| Medium-chain margarine | 70.0 | 31.7 | | |
| Long-chain margarine | | | 70.0 | 31.7 |
| White soft sugar | 40.0 | 18.1 | 40.0 | 18.1 |
| Salt | 0.3 | 0.1 | 0.3 | 0.1 |
| Whole egg | 10.0 | 4.5 | 10.0 | 4.5 |
| Weak flour | 100.0 | 45.3 | 100.0 | 45.3 |
| Baking powder | 0.60 | 0.3 | 0.60 | 0.3 |
| Total | 220.9 | 100.0 | 220.9 | 100.0 |
| Oils and fats contained relative to flour | | 70% | | 70% |
| Evaluation results | | | | |
| Maintain shape | Excellent | | Not very good | |
| Crispy texture | Excellent | | Not very good | |
| Fragility | Excellent | | Not very good | |
| Aroma | Excellent | | Poor | |

### [Example 2]

### <Manufacture of cookies>

Cookies according to Example 2 and Comparative Example 2 were manufactured with the components shown in Table 4 by using the medium-chain or long-chain shortening instead of the medium-chain or long-chain margarine in Example 1.

**[Table 4]**

| [Table 4] Components of cookies and evaluations | | | | |
|---|---|---|---|---|
| | Example 2 | | Comparative Example 2 | |
| Raw materials | (g) | (%) | (g) | (%) |
| Medium-chain shortening | 60.0 | 28.5 | | |
| Long-chain shortening | | | 60.0 | 28.5 |
| White soft sugar | 40.0 | 19.0 | 40.0 | 19.0 |
| Salt | 0.3 | 0.1 | 0.3 | 0.1 |
| Whole egg | 10.0 | 4.7 | 10.0 | 4.7 |
| Weak flour | 100.0 | 47.4 | 100.0 | 47.4 |
| Baking powder | 0.60 | 0.3 | 0.60 | 0.3 |
| Total | 210.9 | 100.0 | 210.9 | 100.0 |
| Oils and fats contained relative to flour | | 60% | | 60% |
| Evaluation results | | | | |
| Maintain shape | Good | | Not very good | |
| Crispy texture | Good | | Poor | |
| Fragility | Good | | Poor | |
| Aroma | Good | | Poor | |

### <Evaluations on cookies>

The texture and the like of the cookies manufactured in Examples and Comparative Examples were evaluated in accordance with the evaluation method below.

### <Evaluation method for cookies>

### (1) Method of evaluating how well the cookie maintains its shape

Five experienced panelists totally evaluated the cookies in accordance with the criteria below.
Excellent: shape is not broken in the baking, and dough is not loosened after the baking
Good: shape is not broken in the baking but dough is loosened a little after the baking Not very good: shape is broken a little in the baking and dough is loosened a little after the baking
Poor: shape is broken in the baking and dough is loosened after the baking

### (2) Method of evaluating the crispy texture

Five experienced panelists totally evaluated the cookies in accordance with the criteria below.
Excellent: very crispy
Good: crispy
Not very good: not very crispy
Poor: not crispy and crumbled

### (3) Method of evaluating fragility

Five experienced panelists totally evaluated the cookies in accordance with the criteria below.
Excellent: very hard and not fragile
Good: hard enough and not fragile
Not very good: a little fragile
Poor: fragile

### (4) Method of evaluating aroma

Five experienced panelists totally evaluated the cookies in accordance with the criteria below.
Excellent: very good aroma
Good: good aroma
Not very good: a little weak aroma
Poor: weak aroma

As is clear from Tables 3 and 4, the baked confectionery can maintain its shape, has the crispy texture and the good aroma, and is not fragile in spite of having a high oil content, specifically containing oils and fats by as much as 60 mass% or more relative to flour. This is because the baked confectionery includes oils and fats with 50 mass% or more of triacylglycerol including the medium-chain fatty acid with 6 to 10 carbons as the constituent fatty acid.

The stress applied when the cookies according to Example 1 and Example 2 were cracked was measured five times with the rheometer. Table 5 shows the results.

**[Table 5]**

| [Table 5] Stress to crack cookies | | (unit: newton) |
|---|---|---|
| | Example 1 | Comparative Example 1 |
| Margarine | 20.96 ± 1.56 | 16.12 ± 1.30 |
| | Example 2 | Comparative Example 2 |
| Shortening | 17.39 ± 1.69 | 9.00 ± 1.22 |

As is clear from Table 5, it has been proved that Examples including the oils and fats containing triacylglycerol including the medium-chain fatty acid with 6 to 10 carbons as the constituent fatty acid resists against the larger stress than Comparative Examples including the oils and fats not containing such triacylglycerol. This indicates that the cookies according to Examples are less fragile than the cookies according to Comparative Examples.

## Claims

1. A baked confectionery obtained by using cereal flour, oils and fats, and saccharides as main raw materials, the baked confectionery comprising the oils and fats by 60 to 120 mass% relative to the cereal flour, wherein
the oils and fats contain triacylglycerol including a medium-chain fatty acid with 6 to 10 carbons as a constituent fatty acid by 50 mass% or more relative to the oils and fats.

2. The baked confectionery according to claim 1, wherein the cereal flour is one kind or two or more kinds selected from strong flour, medium-strength flour, weak flour, whole wheat flour, brown rice flour, rye, corn, whole fat soybean flour, defatted soybean flour, and rice flour.

3. The baked confectionery according to claim 1 or 2, wherein the oils and fats are one kind or two or more kinds selected from edible oils, margarine, fat spread, and shortening.

4. A food comprising the baked confectionery according to any of claims 1 to 3.

5. A quality modifier for a baked confectionery containing oils and fats by 60 to 120 mass% relative to cereal flour, the quality modifier containing triacylglycerol including a medium-chain fatty acid with 6 to 10 carbons as an active ingredient.
